# EUROPEAN PATENT SPECIFICATION

(11) **EP 3 104 648 B1**
(45) Date of publication and mention of the grant of the patent: **24.02.2021**
(21) Application number: 15745963.7
(22) Date of filing: 28.01.2015
(51) Int. Cl.: H04W 8/26, H04W 68/00, H04W 68/02, H04W 76/20

(54) **SERVICE CONTROL SYSTEM, USER DEVICE AND SERVICE CONTROL METHOD**
DIENSTSTEUERUNGSSYSTEM, BENUTZERVORRICHTUNG UND VERFAHREN ZUR DIENSTSTEUERUNG
SYSTÈME DE COMMANDE DE SERVICE, DISPOSITIF UTILISATEUR ET PROCÉDÉ DE COMMANDE DE SERVICE

(30) Priority: 04.02.2014 JP 2014019853
(43) Date of publication of application: 14.12.2016
(73) Proprietor: NTT DOCOMO, INC., Chiyoda-ku Tokyo 100-6150 (JP); NEC Corporation, Tokyo 108-8001 (JP)
(72) Inventor: KOSHIMIZU, Takashi, Tokyo 100-6150 (JP); IWAI, Takanori, Tokyo 108-8001 (JP); INOUE, Tetsuo, Tokyo 108-8001 (JP)
(74) Representative: Hoffmann Eitle
(86) International application number: PCT/JP2015/052273
(87) International publication number: WO 2015/119003

(56) References cited:
- WO-A1-2012/154325
- WO-A1-2013/006219
- WO-A1-2013/187157
- WO-A2-2013/061614
- US-A1- 2012 157 050
- US-A1- 2012 214 502
- US-A1- 2012 252 518
- US-A1- 2013 155 954
- US-A1- 2014 003 313
- NTT DOCOMO ET AL: "oneM2M Interworking with 3gpp Underlying NW", ONEM2M-ARC-2013-0390R01-3GPP_INTERWORKING. ZIP, ONEM2M , vol. WG2 - Architecture, ARC 7 October 2013 (2013-10-07), pages 1-8, XP084003474, Retrieved from the Internet: URL:URL = http://member.onem2m.org/Application/docum entapp/downloadimmediate/default.aspx?docI D=3437 [retrieved on 2013-10-07]
- NEC ET AL: "Introducing device Triggering in oneM2M architecture", ONEM2M-ARC-2013-0533-DEVICETRIGGERING.DOC, ONEM2M , vol. WG2 - Architecture, ARC 3 December 2013 (2013-12-03), pages 1-7, XP084004118, Retrieved from the Internet: URL:URL = http://member.onem2m.org/Application/docum entapp/downloadimmediate/default.aspx?docI D=3992 [retrieved on 2013-12-03]

## Description

### TECHNICAL FIELD

The present invention relates to a technique of interworking between a communication network to which a user apparatus is connected and an M2M service platform.

### BACKGROUND ART

In recent years, study of M2M (Machine-to-Machine), that is, machine-to-machine communication is progressing in which communication is executed between machines that are connected to a communication network without operation by a human so that proper control of machines and the like are automatically performed.

For example, in 3rdGeneration Partnership Project (3GPP), standardization of a communication standard on M2M is progressing as a name of Machine Type Communication (MTC)(for example: non-patent document 1).

Also, in oneM2M, study on interworking between an M2M platform and a 3GPP Public Land Mobile Network (PLMN) is being conducted (for example: non-patent document 2). More specifically, interfaces (Y-IF and Z-IF) are defined for connecting between Common Service Entity (CSE) that forms an M2M platform, and Gateway GPRS Support Node/PDN Gateway (GGSN/P-GW) and MTC-InterWorking Function(MTC-IWF) that form PLMN (for example, non-patent document 3).

In such an interworking environment, an incoming call from an application server (AS) to an MTC user apparatus (MTC-UE) supporting MTC is realized by utilizing a short message service (SMS), for example.

However, in the case where SMS is utilized for the incoming call from the AS to the MTC-UE, it is necessary to implement a function of an SMS client in the MTC-UE. Thus, there is a problem in that implementation is complicated and cost increases.

Thus, in the non-patent document 4, a technique is proposed which enables triggering from the AS to the MTC-UE including NAT traversing by an IP based protocol without using SMS.

### RELATED ART DOCUMENT

### [NON PATENT DOCUMENT]

[NON PATENT DOCUMENT 1] 3GPP TS 23.682 vll.5.0, September 2013, Architecture enhancements to facilitate communications with packet data networks and applications, R11.
[NON PATENT DOCUMENT 2] oneM2M TS-0001 vO.3.2, oneM2M Functional Architecture, 2014-January-04.
[NON PATENT DOCUMENT 3] oneM2M-ARC-2013-0390R02-3gpp_interworking, NTT DOCOMO, 2013 October.
[NON PATENT DOCUMENT 4] oneM2M-ARC-2013-0575R01-IP_based_MT_Triggering_for_3gpp_Interworking, NTT DOCOMO, 2013 December.

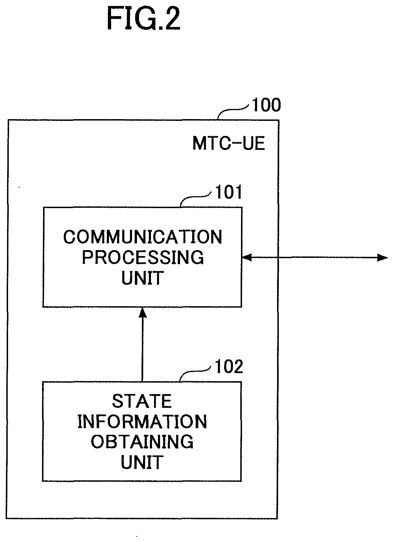

In US 2012/252518 A1, a method and apparatus for network initiated attachment are provided. A machine-type communication (MTC) wireless transmit/receive unit (WTRU) is in a detached state. A MTC server sends a trigger request to the MTC WTRU via a network entity, such as a Home Subscriber Server (HSS), a mobility management gateway (MME), a Serving General packet radio service Support Node (SGSN), or a combination thereof. The network entity stores, updates, or obtains information associated with a current, former, or default connection status of the WTRU. Referring to figure 2, the DT-GW 2005 may use the reachability information obtained from the F1LR/F1SS 2025, a Gateway General Packet Radio Service (GPRS) Support Node (GGSN)/PDN Gateway (P-GW) Radius/Diameter interface 2030 and mobile network operator (MNO) configured policy information to determine the most efficient and effective service and route to use for forwarding of the trigger indication to be delivered to the MTC device 2060.

US 2013/155954 A1 refers to a method and an apparatus for triggering machine type communications applications. Here, it is described that the MTC devices may provide their device trigger/reaching monitoring occasion information to the network. For MTC, the network may define or provide a specific set of monitoring schedules, timer values, or DRX/sleep cycle lengths and the device may indicate which one or more of the schedules it follows when it goes offline. The MME or SGSN or any equivalent CN node with NAS protocol capability may receive and process the messages containing the above MTC device offline and trigger/reaching information. The function that makes the determination of whether or not a device is "offline (and reachable)" may be located in the MME (or SGSN or GGSN/S-GW/PGW), in the HSS (or HLR), in the MTC-IWF, in the SCS, or in the MTC application inside or outside the 3GPP network.

US 2014/003313 A1 provides an apparatus and method for efficiently sending trigger messages.

### SUMMARY OF THE INVENTION

### PROBLEM TO BE SOLVED BY THE INVENTION

However, in the above-mentioned conventional technique, since the CSE does not hold state information of the MTC-UE, when triggering is performed from the CSE to a target MTC-UE, the CSE performs operation without knowing the state of the MTC-UE. Therefore, for example, there is a possibility in that useless operation may occur such as triggering to an MTC-UE that is in a power-off state and to an MTC-UE that is in a connected state, which does not require triggering.

The present invention is contrived in view of the above-mentioned points, and an object of the present invention is to provide a technique that enables a service control system to perform operation based on a state of a user apparatus, the service control system being connected to a communication network to which a user apparatus executing machine-to-machine communication can be connected, and controlling a service on the machine-to-machine communication.

### MEANS FOR SOLVING THE PROBLEM

According to an embodiment of the present invention, there is provided a service control system according to claim 1.

According to an embodiment of the present invention, there is provided a service control method according to claim 5.

### EFFECT OF THE PRESENT INVENTION

According to an embodiment of the present invention, it becomes possible that a service control system that is connected to a communication network to which a user apparatus executing machine-to-machine communication can be connected and that controls a service on the machine-to-machine communication performs operation based on a state of the user apparatus.

### BRIEF DESCRIPTION OF THE DRAWINGS

Fig. 1 is a whole schematic block diagram of a communication system 10 of an embodiment of the present invention;
Fig. 2 is a functional block diagram of an MTC-UE 100 of an embodiment of the present invention;
Fig. 3 is a functional block diagram of an IN-CSE 200 of an embodiment of the present invention;
Fig. 4 is a diagram showing an example of an address table stored in an address table storage unit 204;
Fig. 5 is a diagram showing an example of state information stored in a state information storage unit 205;
Fig. 6 is a diagram showing an address registration sequence to the IN-CSE 200 by the MTC-UE 100 in an embodiment of the present invention;
Fig. 7 is a diagram showing an example of a process sequence based on a request from an AS 40A in an embodiment of the present invention; and
Fig. 8 is a flowchart showing an example of operation determination processing in an embodiment of the present invention.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below.

### (1) Whole schematic configuration of communication system

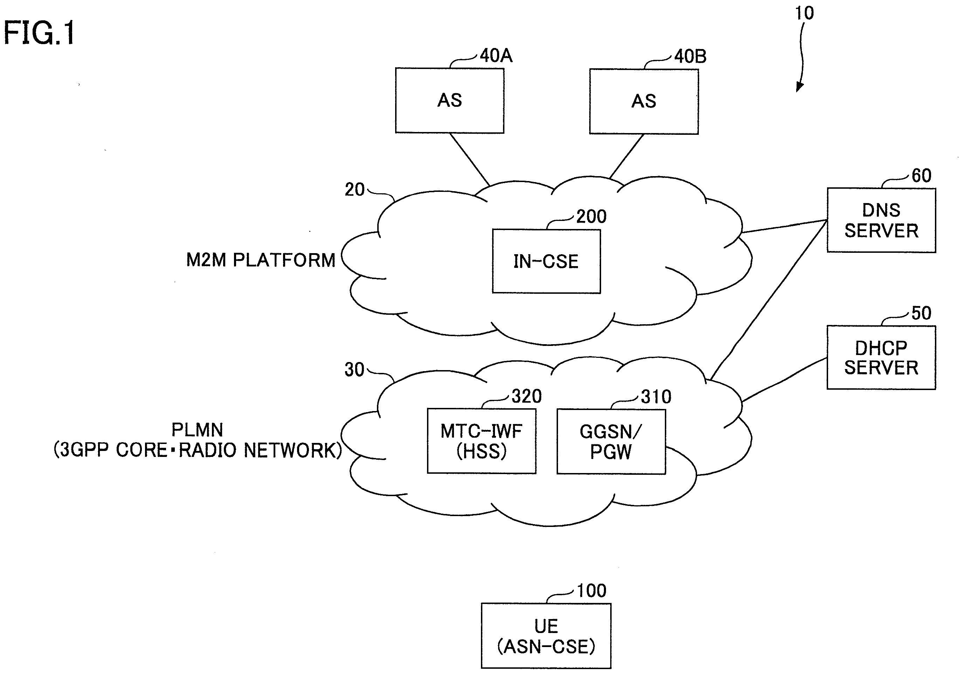

Fig. 1 is a whole schematic block diagram of a communication system 10 in an embodiment of the present invention. As shown in Fig. 1, the communication system 10 includes an M2M platform 20, and a Public Land Mobile Network 30 (PLMN30, hereinafter). Also, the communication system 10 includes a Machine Type Communication-User Equipment 100 (MTC-UE 100, hereinafter).

Application servers 40A, 40B (AS 40A, 40B hereinafter) that form an AE (application entity) is connected to the M2M platform 20. The ASes 40A and 40B can execute machine-to-machine communication with the MTC-UE 100 via the M2M platform 20 and the PLMN 30. As the application, there are an application for data collecting management of electric meters connected to the MTC-UE 100, an application of position information management of the MTC-UE 100, and the like.

A DHCP server 50 for assigning an address to the MTC-UE 100, and a DNS server 60 for executing name resolution are connected to the communication system 10. Although IP address is assumed for the address in the present embodiment, the address is not limited to the IP address, and addresses other than IP address may be used.

The M2M platform 20 meets requirements for the M2M platform (M2M-PF) studied in oneM2M, and also, provides a function for optimizing a service utilizing data transmitted from the MTC-UE 100, and the like. The M2M platform 20 includes Infrastructure Node Common Service Entity 200 (IN-CSE 200 hereinafter). The IN-CSE 200 is a service control apparatus for controlling a service of M2M. The IN-CSE 200 as "service control apparatus" may be one apparatus (computer), or may be a system including a plurality of apparatuses.

The PLMN 30 is a radio communication network complying with 3G (W-CDMA) or Long Term Evolution (LTE) that is defined in 3rd Generation Partnership Project (3GPP), to which the MTC-UE 100 that executes machine-to-machine communication can be connected by radio. The PLMN 30 includes Gateway GPRS Support Node/PDN Gateway 310 (GGSN/PGW 310 hereinafter) and MTC-InterWorking Function 320 (MTC-IWF 320 hereinafter). The IN-CSE 200 is connected to the PLMN 30 via a gateway apparatus such as GGSN/PGW 310.

A network connected to the M2M platform (a network to which the MTC-UE 100 is connected) is not limited to W-CDMA or LTE. For example, a network of wireless LAN may be connected. Also, the network that is connected to the M2M platform may be a cable network (example: IP telephone network).

The MTC-UE 100 is a user apparatus that can execute machine-to-machine communication, and corresponds to an Application Service Node (ASN) CSE (ASN-CSE).

Also, the MTC-UE 100 of the present embodiment includes a function for obtaining state information of itself, and notifying the IN-CSE 200 of the state information. As states of the MTC-UE 100 indicated by the state information, there are a power-off state, a connected state, and a dormant state, for example. A trigger for obtaining the state information is, for example, change of the state.

An example of the connected state is an RRC connected state in a case where the PLMN 30 is LTE. The dormant state may be called a sleep state, and the dormant state is, for example, a state where the MTC-UE 100 is not connected to the PLMN 30 so as to discontinuously monitor a control signal, or a state of power consumption reduction mode.

The IN-CSE 200 controls a service on machine-to-machine communication. More specifically, the IN-CSE 200 processes a request (incoming call) from the AS 40A, 40B to the MTC-UE 100, and relays a packet (example: IP packet) between the MTC-UE 100 and the AS 40A, 40B. The IN-CSE 200 includes a function of Service Capability Server (SCS) described in the MTC specification in 3GPP.

Also, the IN-CSE 200 includes functions for receiving state information from the MTC-UE 100, holding the state information, and performing operation based on the state information when receiving a request for the IN-CSE 200 from an AS. Details of these functions are described later.

The GGSN/PGW 310 is a gateway node of packet access, and executes QoS control and bearer setting control in the PLMN 30. Also, the GGSN/PGW 310 includes a NAT function, and also includes a function for executing conversion between a private address assigned to the MTC-UE 100 and a public address.

The MTC-IWF 320 provides functions necessary for interworking between the M2M platform 20 and the PLMN 30. More specifically, the MTC-IWF 320 derives an identifier (Int-ID) of the MTC-UE 100 that is used in the inside of the PLMN 30 from an identifier (Ext-ID) of the MTC-UE 100 that is used in the outside of the PLMN 30. By the way, the above-mentioned function of the MTC-IWF 320 is provided in cooperation with the Home Subscriber Server(HSS) defined in 3GPP.

### (2) Apparatus configuration

Next, apparatus configurations of the MTC-UE 100 and the In-CSE 200 are described. By the way, the apparatus configurations described below show only configurations related to the present embodiment.

### (2.1)MTC-UE100

Fig. 2 shows a functional block configuration diagram of the MTC-UE 100. As shown in Fig. 2, the MTC-UE includes a communication processing unit 101, and a state information obtaining unit 102.

The communication processing unit 101 includes functions of address registration necessary for enabling the MTC-UE 100 to communicate with the IN-CSE 200 (that is for setting a connection), and general communication processing such as data transmission and reception and the like. Also, the communication processing unit 101 can transmit, to the IN-CSE 200, state information of the MTC-UE 100 obtained by the state information obtaining unit 102.

The state information obtaining unit 102 obtains state information based on the state of the MTC-UE 100, and passes the state information to the communication processing unit 101. As described before, as the state, for example, there are a power off state, a dormant state, and a connected state.

As to the power off state, for example, when the state information obtaining unit 102 detects that a button for tuning off the power is pushed by the user and that processing for power off is progressing, the state information obtaining unit 102 generates information indicating the power off state and passes the information to the communication processing unit 101.

As to the dormant state, for example, when the state information obtaining unit 102 detects that the state of the MTC-UE 100 changes from the connected state to the dormant state based on a communication state in the communication processing unit 101 (example: entering a discontinuous reception state, entering a power consumption reduction mode, and the like), or based on power consumption amount of the MTC-UE 100 (power consumption becomes equal to or less than a threshold value, and the like), the state information obtaining unit 102 passes information that indicates the dormant state to the communication processing unit 101.

Also, as to the connected state, for example, the state information obtaining unit 102 detects that the MTC-UE 100 enters the connected state from the dormant state or the power off state based on a communication state of the communication processing unit 101 (RRC connected and the like), so as to pass information indicating that the MTC-UE 100 is in the connected state to the communication processing unit 101.

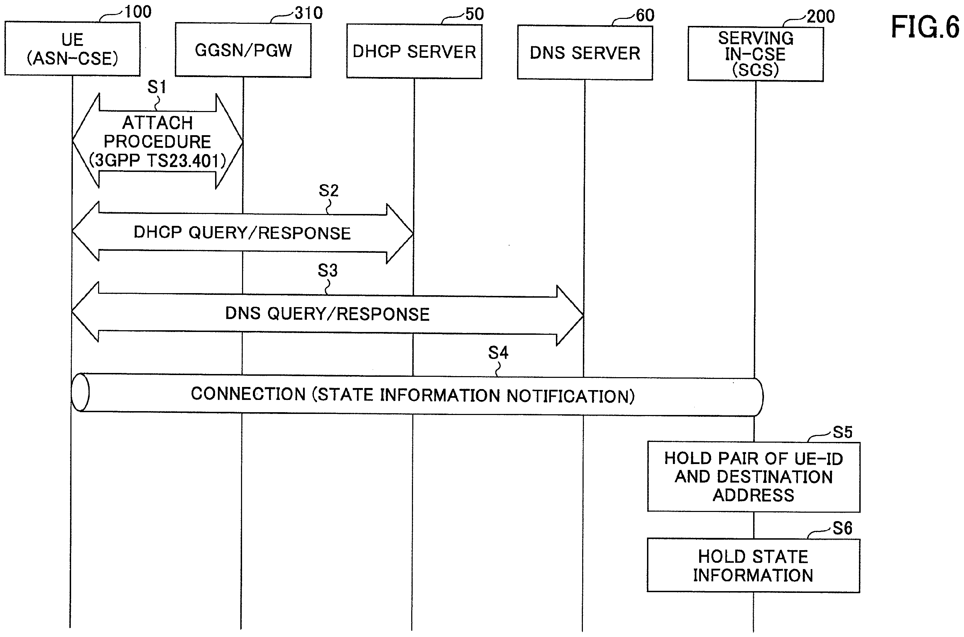

The communication processing unit 101 that receives state information from the state information obtaining unit 102 transmits the state information to the IN-CSE 200 when communication with the IN-CSE 200 is available at the time point, that is, when a connection is established. When the communication is not available at that time point (the connection is not established), the communication processing unit 101 transmits the state information to the IN-CSE 200 after setting the connection by executing a procedure of steps 1-4 of Fig. 6 described later. The IN-CSE 200 that receives the state information may return acknowledgement response (ACK) to the MTC-UE 100. Accordingly, the MTC-UE 100 can know that the state information has been sent to the IN-CSE 200 without fail.

The functional configuration of the MTC-UE 100 is not limited to the above-mentioned one, and any configuration that can realize processing described in the present embodiment may be adopted. For example, a user apparatus that can be used as the MTC-UE 100 is a user apparatus in a communication system that includes a communication network to which the user apparatus executing machine-to-machine communication is connectable, and a service control apparatus that is connected to the communication network via a gateway apparatus and that controls a service on the machine-to-machine communication, including:
a state information obtaining unit configured to obtain state information indicating a state of the user apparatus; and
a communication processing unit configured to transmit state information obtained by the state information obtaining unit to the service control apparatus.

When the service control apparatus receives a request for the user apparatus from an application server after the state information is transmitted to the service control apparatus, the communication processing unit receives triggering from the service control apparatus when the state is a dormant state, and the communication processing unit receives the request from the service control apparatus when the state is a connected state. In this way, it becomes possible to perform proper communication control according to a state.

### (2.2)IN-CSE 200

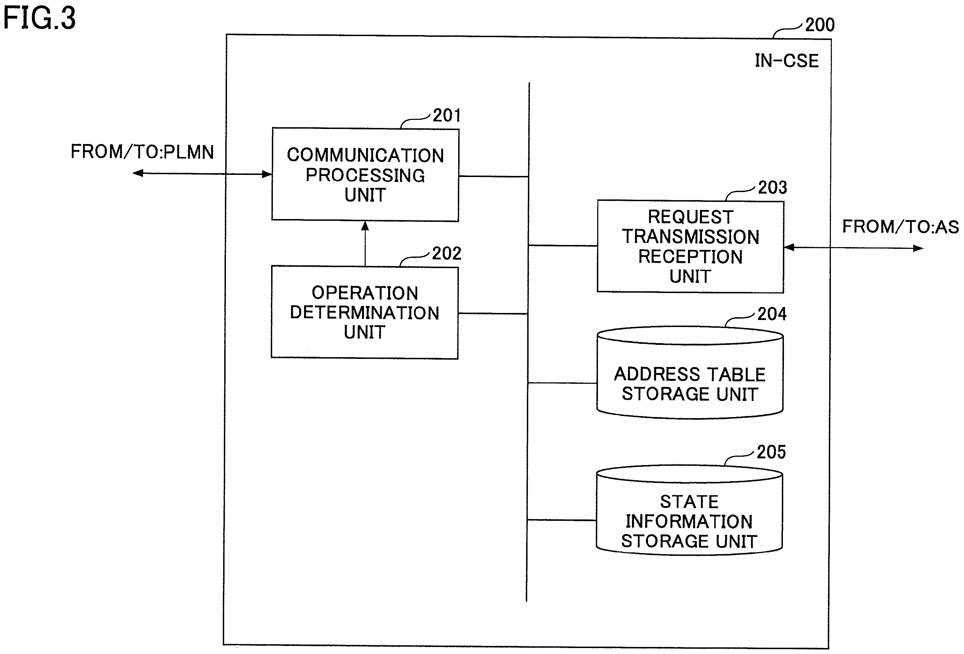

Fig. 3 is a functional block configuration diagram of the IN-CSE 200. As shown in Fig. 3, the IN-CSE 200 includes a communication processing unit 201, an operation determination unit 202, a request transmission reception unit 203, an address table storage unit 204, and a state information storage unit 205. The communication processing unit 201 and the operation determination unit 202 may be called a communication control unit as a whole.

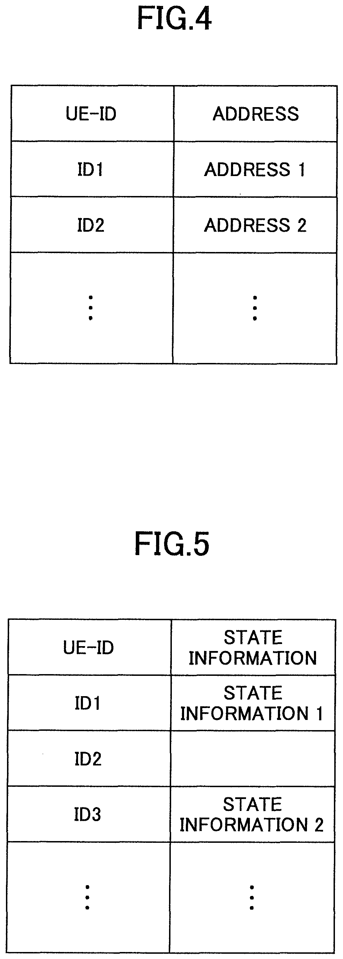

The communication processing unit 201 performs general processing for communication with the MTC-UE 100 and the like. The address table storage unit 204 holds an address (destination address to the MTC-UE 100) and a UE-ID (apparatus identifier) for identifying the MTC-UE 100 by associating the address with the UE-ID. Fig. 4 shows an example of an address table stored in the address table storage unit 204. The address shown in Fig. 4 is, for example, an IP address, IP address and a port number, and the like. Although the UE-ID may be any ID that can identify the MTC-UE 100, International Mobile Equipment Identity Software Version (IMEI-SV), M2M-Node-ID, Mobile Subscriber ISDN Number (MSISDN), Terminated-CSE-ID or International Mobile Subscriber Identity (IMSI) or the like, may be used as the ID.

The request transmission reception unit 203 accepts (receives) a request addressed to thee MTC-UE 100 from the AS 40A, 40B connected to the M2M platform 20. The content of the request is, for example, a command for the MTC-UE 100, an access destination of the MTC-UE 100 (example: destination of an information collecting server and the like for transmission of a measured power amount in the case where the MTC-UE 100 is a power meter) and the like.

Fig. 5 shows an example of state information that is stored in the state information storage unit 205. As shown in Fig. 5, the state information storage unit 205 stores the state information received from the MTC-UE 100 by associating it with a UE-ID.

When the request transmission reception unit 203 receives a request (including UE-ID) addressed to the MTC-UE 100 from the AS 40A, 40B, the operation determination unit 202 determines what operation to perform based on state information of the MTC-UE 100 stored in the state information storage unit 205. Details of operation of the operation determination unit 202 are described later. The functional configuration of the IN-CSE 200 is not limited to the above-mentioned one, and any configuration that can realize processing described in the present embodiment may be adopted. For example, a service control apparatus that can be used for the IN-CSE 200 is a service control apparatus in a communication system that includes a communication network to which a user apparatus executing machine-to-machine communication is connectable, and a service control apparatus that is connected to the communication network via a gateway apparatus and that controls a service on the machine-to-machine communication, including:
a state information storage unit configured to store state information, indicating a state of the user apparatus, received from the user apparatus; and
a communication control unit configured, when receiving a request for the user apparatus from an application server, to determine communication operation for the request based on the state information stored in the state information storage unit, and to execute determined communication operation.

Also, in the present embodiment, there is provided a service control system that is connected to a communication network to which a user apparatus for executing machine-to-machine communication is connectable, and that controls a service on the machine-to-machine communication, including:
a reception unit configured to receive state information indicating a state of the user apparatus; and
a communication control unit configured, when receiving a request for the user apparatus from an application server, to determine communication operation for the request based on the state information, and to execute determined communication operation.

The service control system may be the IN-CSE 200, or may be a system including the IN-CSE 200, SCS, AS, PGW and the like.

The communication control unit performs triggering for the user apparatus when the state information indicates a dormant state. The communication control unit performs the triggering by transmitting a triggering request including a part or all of content of the request received from the application server. Also, the communication control unit determines information to be included in the triggering request based on the state information and the content of the request. Further, the communication control unit notifies the application server that communication is unavailable when the state information indicates power-off or indicates that communication is unavailable. Also, when the state information indicates a connected state, the communication control unit transmits the request to the user apparatus without performing triggering for the user apparatus.

### (3) Operation of communication system

Next, operation of the communication system 10 is described. More specifically, registration operation of address and UE-ID to the IN-CSE 200 by the MTC-UE 100, and request operation from the AS 40A to the MTC-UE 100 are described.

### (3.1) Registration operation of address and UE-ID to the IN-CSE 200 by the MTC-UE 100

Fig. 6 shows a registration sequence of an address and a UE-ID to the IN-CSE 200 associated with attach to the PLMN 30 by the MTC-UE 100. As shown in Fig. 6, the MTC-UE 100 executes an attach procedure to the PLMN 30 according to the standard (TS23.401 and TS23.060) of 3GPP (step 1). More specifically, the MTC-UE 100 executes an attach procedure with the GGSN/PGW 310 so as to set a communication bearer and the like.

Next, the MTC-UE 100 transmits, to the DHCP server 50, a DHCP Query including an Access Point Name (APN) and the like of the Packet Data NW (PDN) to which the MTC-UE 100 desires to connect, so as to obtain an address of the DNS server 60 (step 2). Also, the MTC-UE 100 transmits a DNS Query to the DNS server 60 to obtain an address of the IN-CSE 200 that is the target (step 3).

The MTC-UE 100 starts communication with the IN-CSE 200 based on the obtained address of the IN-CSE 200 (Serving IN-CSE) (step 4). In the communication, for example, the MTC-UE 100 sets a connection with the IN-CSE 200.

In the present embodiment, the MTC-UE 100 may be configured such that it does not cooperate with the DHCP server 50 and the DNS server 60. For example, when the MTC-UE 100 has set the own address and also obtained the address of the IN-SCE 200, steps 2 and 3 may be omitted.

In step 4, the address of the MTC-UE 100 and the UE-ID are transmitted to the IN-CSE 200, so that these are held in the IN-CSE 200 in which they are associated with each other. Since the address of the MTC-UE 100 becomes a destination address to the MTC-UE 100 from the viewpoint of IN-CSE 200, it can be called "destination address". This destination address may be an address assigned to the MTC-UE 100, or may be a public address (address of outside) of the GGSN/PGW 310 as a NAT. In this case, when transmitting a packet from the IN-CSE 200 to the MTC-UE 100, the public address is used as a destination address, and the address is converted to a private address (address assigned to the MTC-UE 100) at the GGSN/PGW 310, so that the packet is transmitted to the MTC-UE 100.

Also, in step 4, in a case where the state in the MTC-UE 100 has been changed from the previous state, the MTC-UE 100 transmits the state information to the IN-CSE 200 at the time point of step 4. The MTC-UE 100 may transmit the state information together with the UE-ID, or may transmit the state information without the UE-ID. When not attaching the UE-ID, for example, the IN-CSE 200 identifies the MTC-UE 100 that transmits the state information from connection information, and obtains the UE-ID from an address table so as to be able to hold state information and UE-ID as a pair.

Also, the MTC-UE 100 itself may transmit the address and the UE-ID of MTC-UE 100 to the IN-CSE 200, or another apparatus (GGSN/PGW 310) may transmit them to the IN-CSE 200.

The IN-CSE 200 stores, in the address table, the address (destination address) and the UE-ID notified from the MTC-UE 100 (or GGSN/PGW310). When they are already stored, they are updated (step 5). Further, when the IN-CSE 200 receives state information from the MTC-UE 100, the IN-CSE 200 stores the state information in the state information storage unit 205 with the UE-ID (step 6).

The timing at which the MTC-UE 100 transmits the state information to the IN-CSE 200 may be a time when there is a state change, or the state information may be transmitted periodically.

### (3.2) Request operation from the AS 40A to the MTC-UE 100

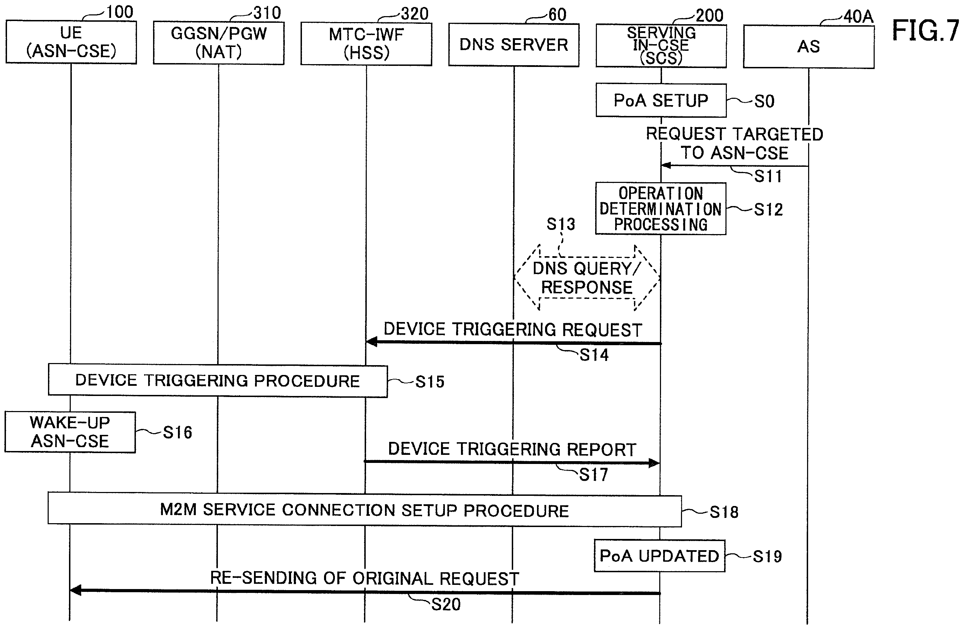

Fig. 7 shows an example of a sequence in a case where a request for the MTC-UE 100 is transmitted from the AS 40A. As a premise for the sequence shown in Fig. 7, by the procedure shown in Fig. 6, for example, it is assumed that a pair of the destination address and the UE-ID of the MTC-UE 100 is stored in the IN-CSE 200 (step 0). PoA in step 0 of Fig. 7 is an abbreviation of Point of Attachment, which corresponds to the destination address.

The IN-CSE 200 receives a request (a request addressed to the MTC-UE 100) including the UE-ID from the AS 40A (step 11). This request includes, for example, a command for the MTC-UE 100, destination address for sending data, and the like.

The IN-CSE 200 obtains, from the state information storage unit 205, state information corresponding to the UE-ID included in the received request to determine next operation based on the state information. The determination method will be described later. Fig. 7 shows an example in a case where, as a result of the determination based on state information, it is determined that triggering is executed. Here, triggering is a process to wake up the MTC-UE 100 which is in a dormant state (or a sleep state) to change the state into normal running state. Triggering may be called "incoming call".

The IN-CSE 200 that has determined to perform triggering performs operation to execute triggering on the MTC-UE 100. In this example, since the IN-CSE 200 does not hold an address of the MTC-IWF 320 corresponding to the MTC-UE 100 which is the destination, the IN-CSE 200 transmits a DNS Query to the particular DNS server 60 based on the UE-ID so as to obtain an address of the MTC-IWF 320 corresponding to the MTC-UE 100, first (step 13).

In the example of Fig. 7, the IN-CSE 200 once stores content of the request received from the AS 40A in a buffer, and transmits a triggering request to the MTC-IWF 320 (step 14). At this time, the IN-CSE 200 may include a part or all of the request received from the AS 40A in the triggering request, and transmit the triggering request.

The MTC-IWF 320 that receives the triggering request executes a triggering procedure in the PLMN 30 (step 15). This triggering procedure is, for example, T4 trigger delivery procedure defined in 3GPP TS23.682. The MTC-UE 100 receives the triggering signal by the triggering procedure so that the MTC-UE 100 is triggered, and the MTC-UE 100 enters a wake-up state from the dormant state (step 16). This state may be called "launched" state, active state, or the like.

Also, the MTC-IWF 320 reports, to the IN-CSE 200, a triggering report including information indicating whether triggering succeeds or not and the UE-ID (step 17).

The launched MTC-UE 100 executes a procedure for connection setup called M2M Service Connection setup procedure to establish a service connection with the IN-CSE 200 (step 18). The IN-CSE 200 confirms that the destination address (PoA) of the MTC-UE 100 is valid since the service connection is established by the triggering. Thus, the IN-CSE 200 updates the destination address as a valid address by storing it with the UE-ID (step 19). Then, the IN-CSE 200 transmits the request stored in the buffer to the MTC-UE 100 (step 20). However, in a case where all of the request is included in the triggering request so that the triggering request is transmitted, the processing of step 20 is not necessarily required.

### (4) Operation determination processing

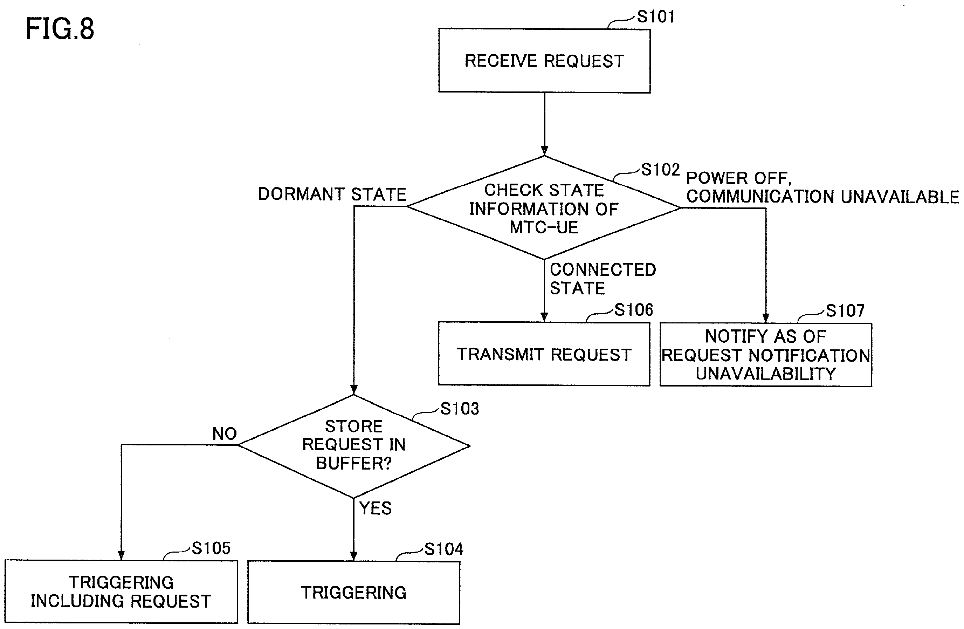

Next, the operation determination processing that is executed by the IN-CSE 200 in step 12 of Fig. 7 is described with reference to a flowchart of Fig. 8.

In the IN-CSE 200, the request transmission reception unit 203 receives a request including the UE-ID from the AS (step 101). The operation determination unit 202 obtains, from the state information storage unit 205, state information corresponding to the UE-ID that is included in the request received by the request transmission reception unit 203, and determines operation to be executed according to the content (step 102).

In the present embodiment, when the state information indicates a dormant state, the operation determination unit 202 determines to perform triggering for the MTC-UE 100. The request received from the AS can be included in the triggering request. When the request is included, it is not necessary to store the request in the buffer.

Thus, when the state information indicates the dormant state, first, the operation determination unit 202 determines whether to store the request in the buffer (step 103). This determination can be performed, for example, based on content size of the request, or substance of the content. That is, for example, when the content size of the request is smaller than a predetermined threshold, it can be determined not to store the request in the buffer. When the content size of the request is equal to or greater than a predetermined threshold, it can be determined to store the request in the buffer. As an example for determining by checking substance of the content, in a case where a destination to which the ASN-CSE connects is not a CSE defined in oneM2M, but the destination is other MTC server and the like, since it is rather desirable to omit establishment of the connection by the IN-CSE by default in the process of step 18, it can be considered that a destination (URL) and the like of the other MTC server is willingly included in the trigger. That is, for example, when the content of the request is not a destination of a CSE defined in oneM2M, but is a destination of other MTC server, the operation determination unit 202 includes the request in the triggering without storing the request in the buffer.

In the case of Yes in step 103 (when storing in the buffer), after storing the request in the buffer, the operation determination unit 202 causes the communication processing unit 201 to transmit a triggering request which does not include the request (step 104).

In the case of No in step 103 (when not storing in the buffer), the operation determination unit 202 causes the communication processing unit 201 to transmit a triggering request which includes the request (step 105). By the way, in step 104 where the request is stored in the buffer, it is possible to include a part of the request in the triggering request. Also, in step 105 where the request is not stored in the buffer, other than that all of the request is included in the triggering request, it is also possible to include a part of the request in the triggering request.

It can be considered that state information corresponding to the UE-ID is not stored in the state information storage unit 205. In such a case, since the state of the MTC-UE 100 cannot be ascertained, triggering is performed like the case of the dormant state. By the way, it is an example to perform control such that triggering is performed when the state information corresponding to the UE-ID is not stored.

When the state information indicates a connected state, since the MTC-UE 100 is running, the operation determination unit 202 determines that it is unnecessary to perform triggering so as to instruct the communication processing unit 201 to transmit the request to the MTC-UE 100 (step 106). When the state information indicates power off or some sort of communication unavailability state, the operation determination unit 202 determines that it is not possible to perform request or triggering for the MTC-UE 100, so as to transmit, to the AS which is a transmission source of the request, information indicating that request notification is not available (step 107).

As described before, it is possible to include a part or all of the request received from the AS in the triggering request executed in the case of dormant state. For example, the operation determination unit 202 determines what to include in the triggering request from the request, designates content to include to the communication processing unit 201, so that the communication processing unit 201 transmits the triggering request including the designated content.

Also, for example, the IN-CSE 200 can include, in the triggering request, destination information such as URL included in the request received from the AS, and transmit the triggering request. For example, the MTC-UE 100 that receives the destination information can perform operation for interpreting the destination information and accessing the access destination corresponding to the destination information after being launched by the triggering.

Also, for example, the IN-CSE 200 can include, in the triggering request, an instruction (or a command) included in the request received from the AS, and transmit the triggering request. The MTC-UE 100 that receives the instruction interprets the instruction and performs processing according to the instruction after being launched by the triggering.

Also, for example, the IN-CSE 200 can include, in the triggering request, destination information (URI, APN and the like) of an entity outside of oneM2M domain, included in the request received from the AS, and transmit the triggering request. For example, the MTC-UE 100 that receives the destination information can perform operation for interpreting the destination information and accessing the access destination corresponding to the destination information after being launched by the triggering.

As mentioned above, the IN-CSE 200 can transmit various information by including it in the triggering request. As to which information to include, for example, the operation determination unit 202 can determine it based on state information and content of the request. For example, it is assumed that the state information is information indicating more detailed state such as "entering dormant after performing a process A". In this case, when the operation determination unit 202 ascertains that the request includes an instruction of processing suitable for the state (processing suitable for execution after the process A) by analyzing content of the request received from the AS, it is possible to perform control to transmit the triggering request by including the instruction in the triggering request.

Also, the operation determination unit 202 can perform control for transmitting the triggering request by including all of the content of the request in the triggering request since content data of the request is smaller than a predetermined threshold. Also, the operation determination unit 202 can perform control for storing the request in a buffer and performing only triggering since content data of the request is greater than a predetermined threshold.

### (5) Summary, effect and the like of the embodiment

As described above, in the present embodiment, the IN-CSE 200 holds information indicating a state of the MTC-UE 100 (power off, connected, dormant) so as to determine operation when receiving a request according to the state.

According to a conventional technique which does not have such a function, the IN-CSE 200 performs triggering without exception without knowing the state of the MTC-UE 100. Thus, it may occur that the IN-CSE 200 transmits a triggering request to a power-off MTC-UE 100, and that the IN-CSE 200 performs triggering to a connected MTC-UE 100. On the other hand, according to the present embodiment, such problems are solved.

Also, in the present embodiment, when a change of the state of the MTC-UE 100 occurs, the MTC-UE 100 transmits updated state information to the IN-CSE 200. By providing such a function, it becomes possible that the IN-CSE 200 can properly hold the state of the MTC-UE 100. As a result, the IN-CSE 200 can properly perform operation determination based on state information.

Also, in the present embodiment, the IN-CSE 200 determines information to be included in the triggering request by considering the held state information of the MTC-UE 100 and a request (incoming content) from the AS to execute triggering operation. By providing such functions, it becomes possible to realize control corresponding to various objects and highly reliable operation.

In the above, the present invention has been explained while referring to the specific embodiments. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the IN-CSE 200 and the MTC-UE 100 have been explained by using functional block diagrams. However, such an apparatus may be implemented in hardware, software, or a combination thereof. The software that operates by a processor provided in the IN-CSE 200 according to the embodiment of the present invention, and the software that operates by a processor provided in the MTC-UE 100 may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the scope of the present invention as defined by the claims.

### DESCRIPTION OF REFERENCE SIGNS

- 10: communication system
- 20: M2M platform
- 30: PLMN
- 40A, 40B: AS
- 50: DHCP server
- 60: DNS server
- 100: MTC-UE
- 101: communication processing unit
- 102: state information obtaining unit
- 200: IN-CSE
- 201: communication processing unit
- 202: operation determination unit
- 203: request transmission reception unit
- 204: address table storage unit
- 205: state information storage unit
- 310: GGSN/PGW
- 320: MTC-IWF

## Claims

1. A service control system (20) for being connected to a communication network (30) to which a user apparatus (100) for executing machine-to-machine communication is connectable, and that controls a service on the machine-to-machine communication, comprising:
a reception unit (203) configured to receive state information indicating a state of the user apparatus; and a communication control unit (201, 202) configured, when receiving a request for the user apparatus from an application server (40A, 40B), to determine communication operation for the request based on the state information, and to execute determined communication operation, wherein the communication control unit is configured to perform triggering for the user apparatus when the state information indicates that the user apparatus is in a dormant state,
wherein the communication control unit notifies the application server that communication is unavailable when the state information indicates power-off or indicates that communication is unavailable.

2. The service control system as claimed in claim 1, wherein the communication control unit is configured to perform the triggering by transmitting a triggering request including a part or all of content of the request received from the application server.

3. The service control system as claimed in claim 2, wherein the communication control unit is configured to determine information to be included in the triggering request based on the state information and the content of the request.

4. The service control system as claimed in any one of claims 1-3, wherein, when the state information indicates a connected state, the communication control unit is configured to transmit the request to the user apparatus without performing triggering for the user apparatus.

5. A service control method executed by a service control system (20) that is connected to a communication network to which a user apparatus (100) for executing machine-to-machine communication is connectable, and that controls a service on the machine-to-machine communication, comprising:
a reception step of receiving state information indicating a state of the user apparatus;
a communication control step of, when receiving a request for the user apparatus from an application server, determining communication operation for the request based on the state information, and executing determined communication operation;
a triggering step of performing triggering for the user apparatus when the state information indicates that the user apparatus is in a dormant state, the method further comprising notifying the application server that communication is unavailable when the state information indicates power-off or indicates that communication is unavailable.

## Patentansprüche

1. Dienststeuerungssystem (20), das mit einem Kommunikationsnetzwerk (30) verbunden werden kann, mit dem eine Benutzereinrichtung (100) verbunden werden kann, um Maschine-zu-Maschine-Kommunikation auszuführen, und das einen Dienst für die Maschine-zu-Maschine-Kommunikation steuert, umfassend:
eine Empfangseinheit (203), die so ausgelegt ist, dass sie Zustandsinformationen empfängt, die einen Zustand der Benutzereinrichtung anzeigen; und
eine Kommunikationssteuerungseinheit (201, 202), die so ausgelegt ist, dass sie, wenn sie eine Anforderung für die Benutzereinrichtung von einem Anwendungsserver (40A, 40B) empfängt, auf Basis der Zustandsinformationen einen Kommunikationsbetrieb für die Anforderung bestimmt und den bestimmten Kommunikationsbetrieb ausführt,
wobei die Kommunikationssteuerungseinheit so ausgelegt ist, dass sie ein Triggern der Benutzereinrichtung durchführt, wenn die Zustandsinformationen anzeigen, dass sich die Benutzereinrichtung in einem Ruhezustand befindet,
wobei die Kommunikationssteuerungseinheit dem Anwendungsserver meldet, dass keine Kommunikation verfügbar ist, wenn die Zustandsinformationen einen ausgeschalteten Zustand anzeigen oder anzeigen, dass keine Kommunikation verfügbar ist.

2. Dienststeuerungssystem nach Anspruch 1, wobei die Kommunikationssteuerungseinheit so ausgelegt ist, dass sie das Triggern durch Übertragen einer Trigger-Anforderung durchführt, die einen Teil des oder den gesamten Inhalt der vom Anwendungsserver empfangenen Anforderung einschließt.

3. Dienststeuerungssystem nach Anspruch 2, wobei die Kommunikationssteuerungseinheit so ausgelegt ist, dass sie auf Basis der Zustandsinformationen und des Inhalts der Anforderung Informationen bestimmt, die in die Trigger-Anforderung eingeschlossen werden sollen.

4. Dienststeuerungssystem nach einem der Ansprüche 1-3, wobei die Kommunikationssteuerungseinheit so ausgelegt ist, dass sie, wenn die Zustandsinformationen einen verbundenen Zustand anzeigen, die Anforderung an die Benutzereinrichtung überträgt, ohne ein Triggern der Benutzereinrichtung durchzuführen.

5. Dienststeuerungsverfahren, das von einem Dienststeuerungssystem (20) ausgeführt wird, das mit einem Kommunikationsnetzwerk verbunden ist, mit dem eine Benutzereinrichtung (100) verbunden werden kann, um Maschine-zu-Maschine-Kommunikation auszuführen, und das einen Dienst für die Maschine-zu-Maschine-Kommunikation steuert, umfassend:
einen Empfangsschritt des Empfangens von Zustandsinformationen, die einen Zustand der Benutzereinrichtung anzeigen;
einen Kommunikationssteuerungsschritt des, wenn eine Anforderung für die Benutzereinrichtung von einem Anwendungsserver empfangen wird, Bestimmens eines Kommunikationsbetriebs für die Anforderung auf Basis der Zustandsinformationen, und Ausführens des bestimmten Kommunikationsbetriebs;
einen Trigger-Schritt des Durchführens eines Triggerns der Benutzereinrichtung, wenn die Zustandsinformationen anzeigen, dass sich die Benutzereinrichtung in einem Ruhezustand befindet,
wobei das Verfahren weiter das Melden, dass keine Kommunikation verfügbar ist, an den Anwendungsserver umfasst, wenn die Zustandsinformationen einen ausgeschalteten Zustand anzeigen oder anzeigen, dass keine Kommunikation verfügbar ist.

## Revendications

1. Système de commande de service (20) permettant d'être connecté à un réseau de communication (30) auquel un appareil utilisateur (100) permettant d'exécuter une communication entre machines est connectable, et qui commande un service sur la communication entre machines, comprenant :
une unité de réception (203) configurée pour recevoir des informations d'état indiquant un état de l'appareil utilisateur ; et
une unité de commande de communication (201, 202) configurée, lors de la réception d'une demande pour l'appareil utilisateur à partir d'un serveur d'application (40A, 40B), pour déterminer une opération de communication pour la demande sur la base des informations d'état, et pour exécuter une opération de communication déterminée,
dans lequel l'unité de commande de communication est configurée pour mettre en œuvre un déclenchement pour l'appareil utilisateur lorsque les informations d'état indiquent que l'appareil utilisateur est dans un état dormant,
dans lequel l'unité de commande de communication notifie le serveur d'application qu'une communication est indisponible lorsque les informations d'état indiquent une alimentation coupée ou indiquent qu'une communication est indisponible.

2. Système de commande de service selon la revendication 1, dans lequel l'unité de commande de communication est configurée pour mettre en œuvre le déclenchement en transmettant une demande de déclenchement incluant une partie ou tout le contenu de la demande reçue à partir du serveur d'application.

3. Système de commande de service selon la revendication 2, dans lequel l'unité de commande de communication est configurée pour déterminer des informations à inclure dans la demande de déclenchement sur la base des informations d'état et du contenu de la demande.

4. Système de commande de service selon l'une quelconque des revendications 1-3, dans lequel, lorsque les informations d'état indiquent un état connecté, l'unité de commande de communication est configurée pour transmettre la demande à l'appareil utilisateur sans mettre en œuvre un déclenchement pour l'appareil utilisateur.

5. Procédé de commande de service exécuté par un système de commande de service (20) qui est connecté à un réseau de communication auquel un appareil utilisateur (100) permettant d'exécuter une communication entre machines est connectable, et qui commande un service sur la communication entre machines, comprenant :
une étape de réception consistant à recevoir des informations d'état indiquant un état de l'appareil utilisateur ;
une étape de commande de communication consistant, lors de la réception d'une demande pour l'appareil utilisateur à partir d'un serveur d'application, à déterminer une opération de communication pour la demande sur la base des informations d'état, et à exécuter une opération de communication déterminée ;
une étape de déclenchement consistant à mettre en œuvre un déclenchement pour l'appareil utilisateur lorsque les informations d'état indiquent que l'appareil utilisateur est dans un état dormant,
le procédé comprenant en outre une notification du serveur d'application qu'une communication est indisponible lorsque les informations d'état indiquent une alimentation coupée ou indiquent qu'une communication est indisponible.
